# EUROPEAN PATENT SPECIFICATION

(11) **EP 3 967 517 B1**
(45) Date of publication and mention of the grant of the patent: **26.04.2023**
(21) Application number: 21194453.3
(22) Date of filing: 02.09.2021
(51) Int. Cl.: B60C 9/20, B60C 9/22

(54) **HEAVY DUTY PNEUMATIC TIRE**
SCHWERLASTLUFTREIFEN
PNEUMATIQUE POUR SERVICE INTENSE

(30) Priority: 14.09.2020 JP 2020154094
(43) Date of publication of application: 16.03.2022
(60) Divisional application: 22185071.2
(73) Proprietor: Sumitomo Rubber Industries, Ltd., Kobe-shi, Hyogo-ken 651-0072 (JP)
(72) Inventor: KITANI, Naofumi, Kobe-shi 651-0072 (JP)
(74) Representative: Manitz Finsterwald Patent- und Rechtsanwaltspartnerschaft mbB

(56) References cited:
- EP-A1- 1 787 825
- EP-A1- 1 800 904
- WO-A1-2020/053071
- DE-A1-102010 016 550
- US-A1- 2009 120 552
- US-B1- 6 367 527

## Description

### TECHNICAL FIELD

The present invention relates to heavy duty pneumatic tires.

### BACKGROUND ART

From the viewpoint of drainage performance, at least three circumferential grooves are formed on the tread of a heavy duty pneumatic tire (hereinafter, tire). Among the circumferential grooves formed on the tread, the circumferential groove located on each outer side in the axial direction is a shoulder circumferential groove.

A belt and a band are provided between the tread and a carcass. The belt includes a plurality of belt plies aligned in the radial direction. Each belt ply includes a large number of belt cords aligned with each other. Normally, steel cords are used as the belt cords. The band includes a spirally wound band cord. A cord formed from an organic fiber such as nylon fiber, or a steel cord is used as the band cord. The stiffness of a tread portion is controlled by adjusting the configuration of the belt or the band (for example JP H09-105084 A).

WO 2020/053071 A1 discloses a tire having an aspect-ratio of 80 %, two circumferential grooves and three land portions. The tire further has a reinforcement comprising a belt and a band, the band comprising a full band whose axial ends are located outward of a shoulder circumferential groove in the axial direction. Other tires are, for example, disclosed in EP 1 800 904 A1, EP 1 787 825 A1, US 6,367,527 B1, DE 10 2010 016 550 A1, and US 2009/0120552 A1

### SUMMARY OF INVENTION

### [TECHNICAL PROBLEM]

In a tire in a running state, deformation and restoration are repeated. Accordingly, the shape of the tire is changed. The ground-contact shape of the tire is changed, so that there is a concern about a decrease in uneven wear resistance.

In a running state of the tire, a tread end portion moves actively. The stiffness of the portion where the circumferential grooves are formed is lower than the stiffness of the portion where the circumferential grooves are not formed. Low-flatness tires having an aspect ratio of 65% or less include a tire having a wide tread surface. In the tire, each shoulder circumferential groove is located more outward in the axial direction than that in a high-flatness tire. In the tire, a shape change is large around the shoulder circumferential groove.

In order to suppress a shape change, use of a full band including a spirally wound band cord is considered. In a low-flatness tire, a shape change during running tends to be increased, so that there is a possibility that such a shape change cannot be sufficiently suppressed only by the full band.

The band cord included in the full band extends substantially in the circumferential direction. A force acts on the band cord of the tire in a running state, in the direction in which the band cord is pulled.

The tire bends when coming into contact with a road surface. Accordingly, the force acting on the band cord is decreased, so that the tension of the band cord is decreased. When the tire becomes separated from the road surface to be restored, the force acting on the band cord is increased, so that the tension of the band cord is increased. In the band cord of the tire in a running state, fluctuation of the tension is repeated. There is a concern that a break may occur in the band cord depending on the degree of fluctuation of the tension. The fluctuation of the tension is large at the end of the full band. As described above, in a running state of the tire, the tread end portion moves actively. When the end of the full band is located more outward in the axial direction, a break of the band cord in the full band is more likely to occur.

When the band cord becomes broken, the holding force thereof is decreased. In this case, the ground-contact shape may be changed, so that there is a possibility that uneven wear resistance and steering stability are decreased.

The present invention has been made in view of the above circumstances, and an object of the present invention is to provide a heavy duty pneumatic tire that can suppress a shape change due to running and achieve improvement of uneven wear resistance.

### [SOLUTION TO PROBLEM]

A heavy duty pneumatic tire according to an aspect of the present invention has a nominal aspect ratio of 65% or less. The heavy duty pneumatic tire includes a tread that comes into contact with a road surface and a reinforcing layer located inward of the tread in a radial direction. At least three circumferential grooves are formed on the tread, whereby at least four land portions aligned in an axial direction are formed in the tread. Among the at least three circumferential grooves, a circumferential groove located on each outer side in the axial direction is a shoulder circumferential groove. A land portion located outward of the shoulder circumferential groove in the axial direction is a shoulder land portion. The reinforcing layer includes a belt including a large number of belt cords aligned with each other, and a band including a spirally wound band cord. The belt includes a plurality of belt plies aligned in the radial direction. The band includes a full band having ends opposed to each other across an equator plane, and a pair of edge bands located outward of the ends of the full band in the radial direction. Each end of the full band is located outward of the shoulder circumferential groove in the axial direction.

Preferably, in the heavy duty pneumatic tire, a ratio of a distance in the axial direction from the shoulder circumferential groove to the end of the full band, to a width in the axial direction of the shoulder land portion, is not less than 10% and not greater than 50%.

Preferably, in the heavy duty pneumatic tire, a distance in the axial direction from the end of the full band to an inner end of the edge band is not less than 10 mm.

Preferably, in the heavy duty pneumatic tire, each end of the full band is located inward of an end of the belt in the axial direction.

In the heavy duty pneumatic tire, at least two belt plies of the plurality of belt plies are located inward of the full band in the radial direction, and the at least two belt plies located inward of the full band have a width larger than the width of the full band.

### [ADVANTAGEOUS EFFECTS OF INVENTION]

According to the present invention, a heavy duty pneumatic tire that can suppress a shape change due to running and achieve improvement of uneven wear resistance is obtained.

### BRIEF DESCRIPTION OF DRAWINGS

FIG. 1 is a cross-sectional view showing a part of a heavy duty pneumatic tire according to an embodiment of the present invention.
FIG. 2 is a schematic diagram illustrating the configuration of a reinforcing layer.
FIG. 3 is an enlarged cross-sectional view showing a part of the tire in FIG. 1.

### DESCRIPTION OF EMBODIMENTS

The following will describe in detail the present invention based on preferred embodiments with appropriate reference to the drawings.

In the present disclosure, a state where a tire is fitted on a normal rim, the internal pressure of the tire is adjusted to a normal internal pressure, and no load is applied to the tire is referred to as a normal state. In the present invention, unless otherwise specified, the dimensions and angles of components of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

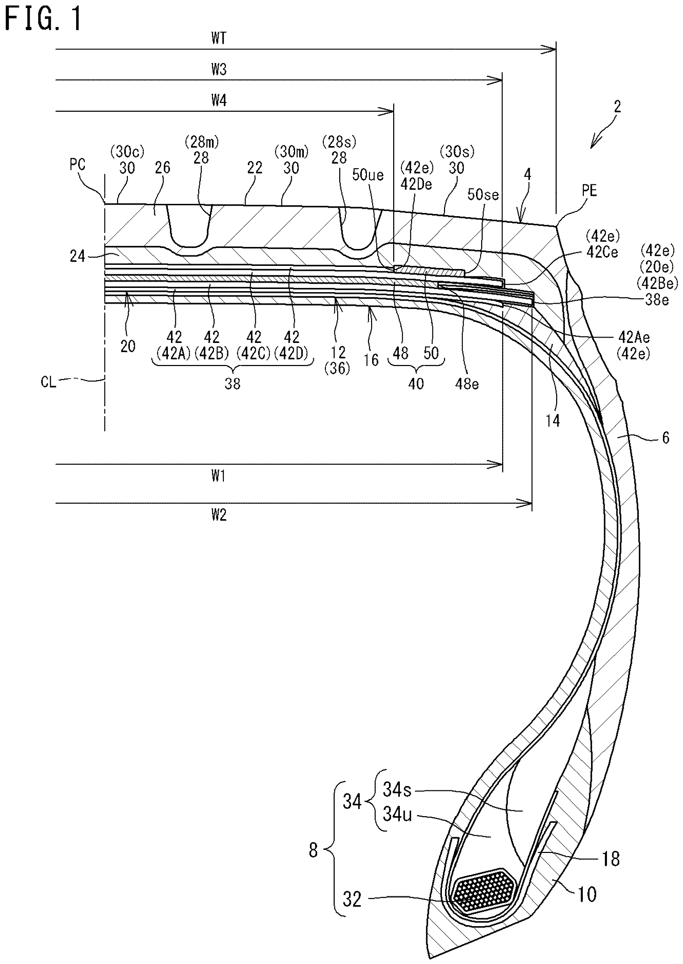

FIG. 1 shows a part of a heavy duty pneumatic tire 2 (hereinafter, referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of 65% or less. The tire 2 is a low-flatness tire.

In the present disclosure, the "nominal aspect ratio" and the "nominal cross-sectional width" are the "nominal aspect ratio" and the "nominal cross-sectional width" included in "tyre designation" specified in JIS D4202 "Automobile tyres-Designation and dimensions".

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. An alternate long and short dash line CL represents the equator plane of the tire 2.

The tire 2 includes a tread 4, a pair of sidewalls 6, a pair of beads 8, a pair of chafers 10, a carcass 12, a pair of cushion layers 14, an inner liner 16, a pair of steel fillers 18, and a reinforcing layer 20.

The tread 4 comes into contact with a road surface at an outer surface thereof. The outer surface is a tread surface 22. In FIG. 1, reference character PC represents the point of intersection of the tread surface 22 and the equator plane CL. The point of intersection PC corresponds to the equator of the tire 2.

In FIG. 1, reference character PE represents an end of the tread surface 22. A double-headed arrow WT represents the width of the tread surface 22. The width WT of the tread surface 22 is represented as the distance in the axial direction from one end PE of the tread surface 22 to the other end PE of the tread surface 22. In the tire 2, when the ends PE of the tread surface 22 cannot be identified from the appearance, the outer ends in the axial direction of a ground-contact surface obtained when the normal load is applied to the tire 2 in the normal state and the tire 2 is brought into contact with a flat surface at a camber angle of 0° are defined as the ends PE of the tread surface 22.

The tread 4 includes a base portion 24 and a cap portion 26 located radially outward of the base portion 24. The base portion 24 is formed from a crosslinked rubber having low heat generation properties. The cap portion 26 is formed from a crosslinked rubber for which wear resistance and grip performance are taken into consideration. As shown in FIG. 1, the base portion 24 covers the entirety of the reinforcing layer 20. The cap portion 26 covers the entirety of the base portion 24.

In the tire 2, at least three circumferential grooves 28 are formed on the tread 4. On the tread 4 of the tire 2 shown in FIG. 1, four circumferential grooves 28 are formed. These circumferential grooves 28 are aligned in the axial direction and continuously extend in the circumferential direction.

Among the four circumferential grooves 28 formed on the tread 4, the circumferential groove 28 located on each outer side in the axial direction is a shoulder circumferential groove 28s. The circumferential groove 28 located inward of the shoulder circumferential groove 28s in the axial direction is a middle circumferential groove 28m. In the tire 2, the four circumferential grooves 28 include a pair of the middle circumferential grooves 28m and a pair of the shoulder circumferential grooves 28s.

In the tire 2, from the viewpoint of contribution to drainage performance and traction performance, the width in the axial direction of each middle circumferential groove 28m is preferably about 2 to 10% of the width WT of the tread surface 22. The depth of each middle circumferential groove 28m is preferably 13 to 25 mm. The width in the axial direction of each shoulder circumferential groove 28s is preferably about 1 to 7% of the width WT of the tread surface 22. The depth of each shoulder circumferential groove 28s is preferably 13 to 25 mm.

As described above, at least three circumferential grooves 28 are formed on the tread 4. Accordingly, at least four land portions 30 are formed in the tread 4. On the tread 4 of the tire 2 shown in FIG. 1, four circumferential grooves 28 are formed, so that five land portions 30 are formed in the tread 4. These land portions 30 are aligned in the axial direction and continuously extend in the circumferential direction.

Among the five land portions 30 formed in the tread 4, the land portion 30 located on each outer side in the axial direction is a shoulder land portion 30s. Each shoulder land portion 30s is located outward of the shoulder circumferential groove 28s in the axial direction and includes the end PE of the tread surface 22. The land portions 30 located inward of the shoulder land portions 30s in the axial direction are middle land portions 30m. The shoulder circumferential grooves 28s are present between the middle land portions 30m and the shoulder land portions 30s. The land portion 30 located inward of the middle land portions 30m in the axial direction is a center land portion 30c. The middle circumferential grooves 28m are present between the center land portion 30c and the middle land portions 30m. In the tire 2, the five land portions 30 include the center land portion 30c, a pair of the middle land portions 30m, and a pair of the shoulder land portions 30s.

In the tire 2, the width in the axial direction of the center land portion 30c is not less than 10% and not greater than 18% of the width WT of the tread surface 22. The width in the axial direction of each middle land portion 30m is not less than 10% and not greater than 18% of the width WT of the tread surface 22. The width in the axial direction of each shoulder land portion 30s is not less than 15% and not greater than 25% of the width WT of the tread surface 22. The width in the axial direction of each land portion 30 is represented as the width in the axial direction of the top surface of the land portion 30 which forms a part of the tread surface 22.

In the tire 2, the land portion 30 located at the center in the axial direction among the land portions 30 formed in the tread 4, that is, the center land portion 30c, is located on the equator plane CL. The tread 4 may be formed such that the circumferential grooves 28 formed on the tread 4 include a circumferential groove 28 located at the center in the axial direction and this circumferential groove 28 is located on the equator plane CL.

Each sidewall 6 is connected to an end of the tread 4. The sidewall 6 extends radially inward from the end of the tread 4. The sidewall 6 is formed from a crosslinked rubber.

Each bead 8 is located radially inward of the sidewall 6. The bead 8 includes a core 32 and an apex 34.

The core 32 extends in the circumferential direction. The core 32 includes a wound wire made of steel. The core 32 has a substantially hexagonal cross-sectional shape.

The apex 34 is located radially outward of the core 32. The apex 34 includes an inner apex 34u and an outer apex 34s. The inner apex 34u extends radially outward from the core 32. The outer apex 34s is located radially outward of the inner apex 34u. The inner apex 34u is formed from a hard crosslinked rubber. The outer apex 34s is formed from a crosslinked rubber that is more flexible than the inner apex 34u. The outer apex 34s is more flexible than the inner apex 34u.

Each chafer 10 is located axially outward of the bead 8. The chafer 10 is located radially inward of the sidewall 6. The chafer 10 comes into contact with a rim (not shown). The chafer 10 is formed from a crosslinked rubber for which wear resistance is taken into consideration.

The carcass 12 is located inward of the tread 4, each sidewall 6, and each chafer 10. The carcass 12 includes at least one carcass ply 36. The carcass 12 of the tire 2 is composed of one carcass ply 36. The carcass ply 36 is turned up around each core 32 from the inner side toward the outer side in the axial direction.

The carcass ply 36 includes a large number of carcass cords aligned with each other, which are not shown. These carcass cords are covered with a topping rubber. Each carcass cord intersects the equator plane CL. In the tire 2, an angle of the carcass cords relative to the equator plane CL is not less than 70° and not greater than 90°. The carcass 12 has a radial structure. In the tire 2, steel cords are used as the carcass cords.

Each cushion layer 14 is located between the reinforcing layer 20 and the carcass 12 at the end of the reinforcing layer 20. The cushion layer 14 is formed from a flexible crosslinked rubber.

The inner liner 16 is located inward of the carcass 12. The inner liner 16 forms an inner surface of the tire 2. The inner liner 16 is formed from a crosslinked rubber that has an excellent air blocking property. The inner liner 16 maintains the internal pressure of the tire 2.

Each steel filler 18 is located at a bead 8 portion. The steel filler 18 is turned up around the core 32 from the inner side toward the outer side in the axial direction along the carcass ply 36.

The steel filler 18 includes a large number of filler cords aligned with each other, which are not shown. In the steel filler 18, the filler cords are covered with a topping rubber. In the tire 2, steel cords are used as filler cords.

The reinforcing layer 20 is located inward of the tread 4 in the radial direction. The reinforcing layer 20 is located between the carcass 12 and the tread 4. The reinforcing layer 20 includes a belt 38 and a band 40.

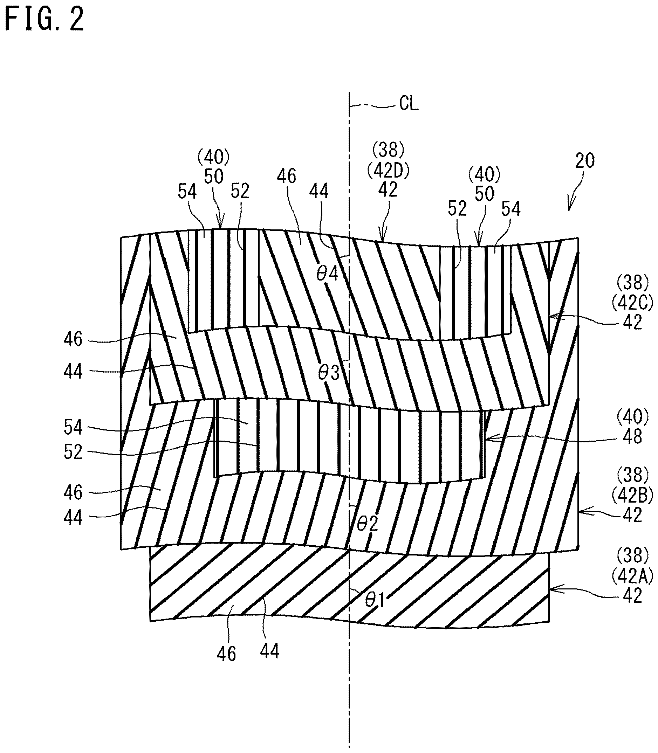

FIG. 2 shows the configuration of the reinforcing layer 20. In FIG. 2, the right-left direction is the axial direction of the tire 2, and the up-down direction is the circumferential direction of the tire 2. The direction perpendicular to the surface of the sheet of FIG. 2 is the radial direction of the tire 2. The front side of the sheet of FIG. 2 is the outer side in the radial direction, and the back side of the sheet is the inner side in the radial direction.

The belt 38 includes a plurality of belt plies 42 aligned in the radial direction. Each belt ply 42 is disposed such that both ends thereof are opposed to each other across the equator plane CL. The belt 38 of the tire 2 includes four belt plies 42. The four belt plies 42 include a first belt ply 42A located on the inner side in the radial direction, a second belt ply 42B located outward of the first belt ply 42A in the radial direction, a third belt ply 42C located outward of the second belt ply 42B in the radial direction, and a fourth belt ply 42D located outward of the third belt ply 42C in the radial direction.

In the tire 2, the second belt ply 42B has a largest width in the axial direction, and the fourth belt ply 42D has a smallest width in the axial direction. The first belt ply 42A and the third belt ply 42C have the same width in the axial direction, or the width in the axial direction of the first belt ply 42A is larger than the width in the axial direction of the third belt ply 42C.

An end 38e of the belt 38 of the tire 2 is represented as an end of the belt ply 42 having the largest width in the axial direction among the plurality of belt plies 42 included in the belt 38. In the tire 2, as described above, among the four belt plies 42 included in the belt 38, the second belt ply 42B has the largest width in the axial direction. The end 38e of the belt 38 of the tire 2 is represented as an end 42Be of the second belt ply 42B having the largest width in the axial direction. The end 38e of the belt 38 is also an end 20e of the reinforcing layer 20.

As shown in FIG. 1, an end 42Ae of the first belt ply 42A is located outward of the shoulder circumferential groove 28s in the axial direction. An end 42Be of the second belt ply 42B is located outward of the shoulder circumferential groove 28s in the axial direction. An end 42Ce of the third belt ply 42C is located outward of the shoulder circumferential groove 28s in the axial direction. An end 42De of the fourth belt ply 42D is located outward of the shoulder circumferential groove 28s in the axial direction.

In FIG. 1, a double-headed arrow W1 represents the width in the axial direction of the first belt ply 42A. A double-headed arrow W2 represents the width in the axial direction of the second belt ply 42B. A double-headed arrow W3 represents the width in the axial direction of the third belt ply 42C. A double-headed arrow W4 represents the width in the axial direction of the fourth belt ply 42D. The width in the axial direction of each belt ply 42 is represented as the distance in the axial direction from one end 42e of the belt ply 42 to the other end 42e of the belt ply 42.

In the tire 2, from the viewpoint of ensuring the stiffness of the tread 4 portion, the ratio (W1/WT) of the width W1 in the axial direction of the first belt ply 42A to the width WT of the tread surface 22 is preferably not less than 0.80 and preferably not greater than 0.90. The ratio (W2/WT) of the width W2 in the axial direction of the second belt ply 42B to the width WT of the tread surface 22 is preferably not less than 0.85 and preferably not greater than 0.95. The ratio (W3/WT) of the width W3 in the axial direction of the third belt ply 42C to the width WT of the tread surface 22 is preferably not less than 0.80 and preferably not greater than 0.90. The ratio (W4/WT) of the width W4 in the axial direction of the fourth belt ply 42D to the width WT of the tread surface 22 is preferably not less than 0.55 and preferably not greater than 0.65.

As shown in FIG. 2, in the tire 2, each belt ply 42 included in the belt 38 includes a large number of belt cords 44 aligned with each other. In FIG. 2, for convenience of description, the belt cords 44 are represented by sold lines, but the belt cords 44 are covered with a topping rubber 46. The belt cords 44 of the tire 2 are steel cords.

In the tire 2, the density of the belt cords 44 in each belt ply 42 is not less than 15 ends/5 cm and not greater than 30 ends/5 cm. The density of the belt cords 44 is represented as the number of cross-sections of the belt cords 44 included per 5 cm width of the belt ply 42 in a cross-section of the belt ply 42 along a plane perpendicular to the direction in which the belt cords 44 extend.

The belt cords 44 in each belt ply 42 are tilted relative to the circumferential direction. The direction in which the belt cords 44 included in the first belt ply 42A are tilted relative to the circumferential direction (hereinafter, the tilt direction of the first belt ply 42A) is the same as the direction in which the belt cords 44 included in the second belt ply 42B are tilted relative to the circumferential direction (hereinafter, the tilt direction of the second belt ply 42B). The tilt direction of the second belt ply 42B is opposite to the direction in which the belt cords 44 included in the third belt ply 42C are tilted relative to the circumferential direction (hereinafter, the tilt direction of the third belt ply 42C). The tilt direction of the third belt ply 42C is the same as the direction in which the belt cords 44 included in the fourth belt ply 42D are tilted relative to the circumferential direction (hereinafter, the tilt direction of the fourth belt ply 42D). The tilt direction of the first belt ply 42A may be opposite to the tilt direction of the second belt ply 42B, and the tilt direction of the fourth belt ply 42D may be opposite to the tilt direction of the third belt ply 42C. From the viewpoint of ensuring a stable ground-contact shape, the tilt direction of the second belt ply 42B is preferably opposite to the tilt direction of the third belt ply 42C.

In FIG. 2, an angle θ1 is a tilt angle (hereinafter, first tilt angle θ1) of the belt cords 44 included in the first belt ply 42A relative to the equator plane CL. An angle θ2 is a tilt angle (hereinafter, second tilt angle θ2) of the belt cords 44 included in the second belt ply 42B relative to the equator plane CL. An angle θ3 is a tilt angle (hereinafter, third tilt angle θ3) of the belt cords 44 included in the third belt ply 42C relative to the equator plane CL. An angle θ4 is a tilt angle (hereinafter, fourth tilt angle θ4) of the belt cords 44 included in the fourth belt ply 42D relative to the equator plane CL.

In the tire 2, each of the first tilt angle θ1, the second tilt angle θ2, the third tilt angle θ3, and the fourth tilt angle θ4 is preferably not less than 10° and preferably not greater than 60°. From the viewpoint of effectively restraining movement of the tire 2 and ensuring a stable ground-contact shape, the first tilt angle θ1 is preferably not less than 40° and preferably not greater than 60°. The second tilt angle θ2 is preferably not less than 10° and preferably not greater than 20°. The third tilt angle θ3 is preferably not less than 10° and preferably not greater than 20°. The fourth tilt angle θ4 is preferably not less than 10° and preferably not greater than 60°.

The band 40 includes a full band 48 and a pair of edge bands 50. As shown in FIG. 1, the full band 48 has ends 48e opposed to each other across the equator plane CL. The pair of edge bands 50 are disposed so as to be spaced apart from each other in the axial direction with the equator plane CL therebetween. In the tire 2, the fourth belt ply 42D, which forms a part of the belt 38, is located between the pair of edge bands 50.

In the tire 2, each edge band 50 is located between the tread 4 and the full band 48. The edge band 50 is located outward of the end 48e of the full band 48 in the radial direction. In the axial direction, an inner end 50ue of the edge band 50 is located inward of the end 48e of the full band 48. In the axial direction, an outer end 50se of the edge band 50 is located outward of the end 48e of the full band 48. The position of the outer end 50se of the edge band 50 may coincide with the position of the end 48e of the full band 48 in the axial direction. The edge band 50 overlaps the end 48e of the full band 48 in the radial direction. In the axial direction, the outer end 50se of the edge band 50 is located inward of the end 42Ce of the third belt ply 42C.

As shown in FIG. 2, the full band 48 and the pair of edge bands 50 included in the band 40 each include a spirally wound band cord 52. In FIG. 2, for the convenience of description, the band cords 52 are represented by solid lines, but each band cord 52 is covered with a topping rubber 54.

In the tire 2, the band cords 52 are steel cords or cords formed from an organic fiber (hereinafter, organic fiber cords). In the case where organic fiber cords are used as the band cords 52, examples of the organic fiber include nylon fibers, polyester fibers, rayon fibers, and aramid fibers. In the tire 2, as the band cord 52 of the full band 48 and the band cords 52 of the edge bands 50, the same cord may be used, or different cords may be used. The band cords 52 used for the full band 48 and the edge bands 50 are determined according to the specifications of the tire 2.

As described above, the full band 48 includes the spirally wound band cord 52. The full band 48 has a jointless structure. In the full band 48, an angle of the band cord 52 relative to the circumferential direction is preferably not greater than 5° and more preferably not greater than 2°. The band cord 52 of the full band 48 extends substantially in the circumferential direction.

The density of the band cord 52 in the full band 48 is not less than 20 ends/5 cm and not greater than 35 ends/5 cm. The density of the band cord 52 is represented as the number of cross-sections of the band cord 52 included per 5 cm width of the full band 48 in a cross-section of the full band 48 along a plane perpendicular to the direction in which the band cord 52 extends.

As described above, each edge band 50 includes the spirally wound band cord 52. The edge band 50 has a jointless structure. In the edge band 50, an angle of the band cord 52 relative to the circumferential direction is preferably not greater than 5° and more preferably not greater than 2°. The band cord 52 of the edge band 50 extends substantially in the circumferential direction.

The density of the band cord 52 in the edge band 50 is not less than 20 ends/5 cm and not greater than 35 ends/5 cm. The density of the band cord 52 is represented as the number of cross-sections of the band cord 52 included per 5 cm width of the edge band 50 in a cross-section of the edge band 50 along a plane perpendicular to the direction in which the band cord 52 extends.

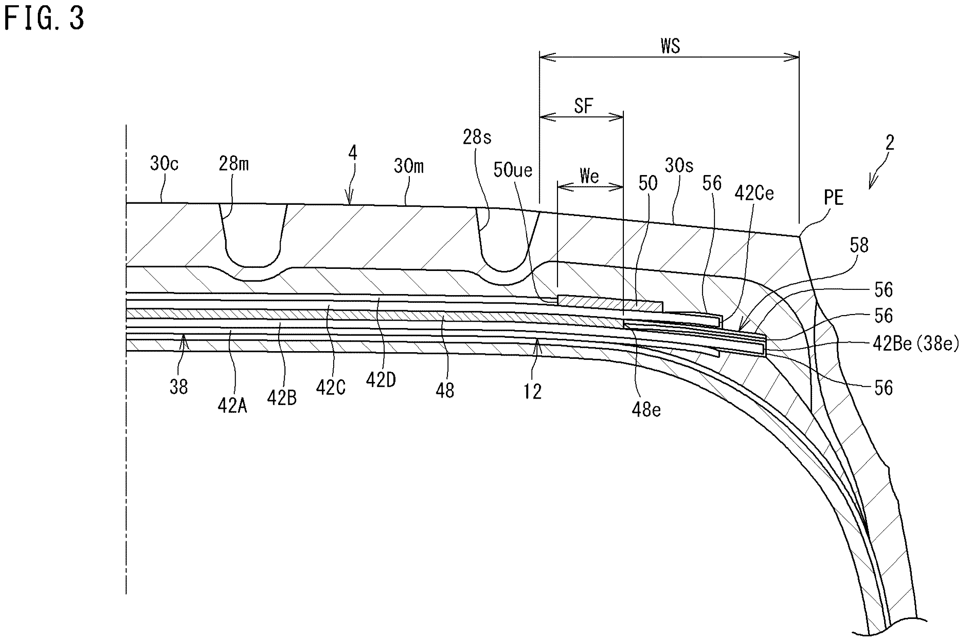

FIG. 3 shows a part of the cross-section of the tire 2 shown in FIG. 1. In FIG. 3, the right-left direction is the axial direction of the tire 2, and the up-down direction is the radial direction of the tire 2. The direction perpendicular to the surface of the sheet of FIG. 3 is the circumferential direction of the tire 2.

In the tire 2, each of the end 42Be of the second belt ply 42B and the end 42Ce of the third belt ply 42C is covered with a rubber layer 56. Two rubber layers 56 are further disposed between the end 42Be of the second belt ply 42B and the end 42Ce of the third belt ply 42C each of which is covered with the rubber layer 56. In the tire 2, an edge member 58 including four rubber layers 56 in total is formed between the end 42Be of the second belt ply 42B and the end 42Ce of the third belt ply 42C. The edge member 58 is formed from a crosslinked rubber. The edge member 58 contributes to maintaining the interval between the end 42Be of the second belt ply 42B and the end 42Ce of the third belt ply 42C. In the tire 2, a change of the positional relationship between the end 42Be of the second belt ply 42B and the end 42Ce of the third belt ply 42C due to running is suppressed. The edge member 58 is a part of the reinforcing layer 20. The reinforcing layer 20 of the tire 2 includes a pair of edge members 58 in addition to the belt 38 and the band 40.

As described above, the full band 48 has the ends 48e opposed to each other across the equator plane CL. The full band 48 extends in the axial direction from the equator plane CL toward each end 48e. Each end 48e of the full band 48 is located outward of the shoulder circumferential groove 28s in the axial direction. The full band 48 is located inward of each shoulder circumferential groove 28s in the radial direction.

Although the tire 2 has low flatness, the full band 48 effectively suppresses deformation around each shoulder circumferential groove 28s. A change of the shape of the tire 2, for example, a change of the contour (hereinafter, also referred to as case line) of the carcass 12, is suppressed, so that a change of the ground-contact shape is suppressed.

In the tire 2, furthermore, each edge band 50 is located outward of the end 48e of the full band 48 in the radial direction. The edge band 50 holds the end 48e of the full band 48. Fluctuation of the tension of the band cord 52 included in the full band 48 is suppressed, so that occurrence of a break of the band cord 52 due to the fluctuation of the tension is suppressed. The full band 48 of the tire 2 can stably exhibit the function of suppressing a shape change. The edge band 50 is narrower than the full band 48. Therefore, tension fluctuation as in the full band 48 is less likely to occur in the band cord 52 of the edge band 50. A break is less likely to occur in the band cord 52 of the edge band 50.

In the tire 2, the full band 48 and the edge bands 50 suppress a shape change of the tire 2 due to running. In particular, a shape change around each shoulder circumferential groove 28s is effectively suppressed. In the tire 2, occurrence of uneven wear, which is a concern with conventional tires, is suppressed. The tire 2 can suppress a shape change due to running and achieve improvement of uneven wear resistance.

In FIG. 3, a double-headed arrow SF represents the distance in the axial direction from the shoulder circumferential groove 28s, specifically, the outer edge of the shoulder circumferential groove 28s, to the end 48e of the full band 48. A double-headed arrow WS represents the width in the axial direction of the shoulder land portion 30s. The width WS in the axial direction is represented as the distance in the axial direction from the inner end of the top surface of the shoulder land portion 30s (that is, the outer edge of the shoulder circumferential groove 28s) to the outer end of the top surface (in the tire 2, the end PE of the tread surface 22).

In the tire 2, the ratio (SF/WS) of the distance SF in the axial direction from the shoulder circumferential groove 28s to the end 48e of the full band 48, to the width WS in the axial direction of the shoulder land portion 30s, is preferably not greater than 50%. Accordingly, the end 48e of the full band 48 is located away from the tread 4 end portion which moves actively in a running state, so that fluctuation of the tension of the band cord 52 is suppressed. In the tire 2, occurrence of a break of the band cord 52 is suppressed. The full band 48 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 48e of the full band 48 is located at an appropriate interval from the shoulder circumferential groove 28s, specifically, the bottom of the shoulder circumferential groove 28s. In the tire 2, occurrence of damage starting from the bottom of the shoulder circumferential groove 28s is suppressed. Since the width of the full band 48 is ensured, the full band 48 contributes to suppression of a shape change of the tire 2. From this viewpoint, the ratio (SF/WS) is more preferably not less than 15%.

In FIG. 3, a double-headed arrow We represents the distance in the axial direction from the end 48e of the full band 48 to the inner end 50ue of the edge band 50.

In the tire 2, the distance We in the axial direction from the end 48e of the full band 48 to the inner end 50ue of the edge band 50 is preferably not less than 10 mm. Accordingly, the edge band 50 effectively holds the end 48e of the full band 48. Fluctuation of the tension of the band cord 52 included in the full band 48 is suppressed, so that occurrence of a break of the band cord 52 due to the fluctuation of the tension is suppressed. The full band 48 of the tire 2 can more stably exhibit the function of suppressing a shape change. From this viewpoint, the distance We in the axial direction is preferably not less than 20 mm.

In the tire 2, the position of the inner end 50ue of the edge band 50 is determined as appropriate in consideration of involvement in occurrence of damage starting from the bottom of the shoulder circumferential groove 28s. Therefore, a preferable upper limit of the distance We in the axial direction is not set. From the viewpoint of effectively suppressing occurrence of damage starting from the bottom of the shoulder circumferential groove 28s, in the axial direction, the inner end 50ue of the edge band 50 is preferably located outward of the bottom of the shoulder circumferential groove 28s, and more preferably located further outward of the shoulder circumferential groove 28s.

In the tire 2, each end 48e of the full band 48 is located inward of the end 38e of the belt 38 in the axial direction. The belt 38 is wider than the full band 48. The belt 38 holds each end 48e of the full band 48. The belt 38 contributes to suppression of fluctuation of the tension of the band cord 52 included in the full band 48. Occurrence of a break of the band cord 52 due to fluctuation of the tension is suppressed, so that the full band 48 can stably exhibit the function of suppressing a shape change. From this viewpoint, the end 48e of the full band 48 is preferably located inward of the end 38e of the belt 38 in the axial direction.

A force acts on the full band 48 of the tire 2 so as to spread from the inner side toward the outer side in the radial direction. Due to this force, tension is generated in the band cord 52 of the full band 48. In the tire 2, the second belt ply 42B is located radially inward of the full band 48.

In the tire 2, the second belt ply 42B reduces the force acting on the full band 48, so that the tension of the band cord 52 included in the full band 48 is appropriately maintained. The second belt ply 42B contributes to suppression of fluctuation of the tension of the band cord 52. Since the second belt ply 42B is wider than the full band 48, fluctuation of the tension of the band cord 52 is effectively suppressed. In the tire 2, a break is less likely to occur in the band cord 52 of the full band 48. The full band 48 can stably exhibit the function of suppressing a shape change. From this viewpoint, at least one belt ply 42 of the plurality of belt plies 42 included in the belt 38 is preferably located inward of the full band 48 in the radial direction. The at least one belt ply 42 located inward of the full band 48 more preferably has a width larger than the width of the full band 48.

In the tire 2, the first belt ply 42A and the second belt ply 42B are located inward of the full band 48 in the radial direction. The first belt ply 42A and the second belt ply 42B contribute to suppression of fluctuation of the tension of the band cord 52. Since the first belt ply 42A and the second belt ply 42B are wider than the full band 48, fluctuation of the tension of the band cord 52 is more effectively suppressed. In the tire 2, a break is less likely to occur in the band cord 52 of the full band 48. The full band 48 can stably exhibit the function of suppressing a shape change. From this viewpoint, at least two belt plies 42 of the plurality of belt plies 42 included in the belt 38 are more preferably located inward of the full band 48 in the radial direction. The at least two belt plies 42 located inward of the full band 48 further preferably have a width larger than the width of the full band 48.

In the tire 2, in the radial direction, the second belt ply 42B is located inward of the full band 48, and the third belt ply 42C is located outward of the full band 48. In the tire 2, the full band 48 is interposed between the second belt ply 42B and the third belt ply 42C. As described above, the second belt ply 42B is wider than the full band 48. The third belt ply 42C is also wider than the full band 48. The plurality of belt plies 42 included in the belt 38 of the tire 2 include two belt plies 42 having a width larger than the width of the full band 48, and the full band 48 is interposed between the two belt plies 42 having a large width. In the tire 2, fluctuation of the tension of the band cord 52 included in the full band 48 is more effectively suppressed, so that a break is less likely to occur in the band cord 52 of the full band 48. The full band 48 of the tire 2 can stably exhibit the function of suppressing a shape change. From this viewpoint, in the tire 2, preferably, the plurality of belt plies 42 included in the belt 38 include two belt plies 42 having a width larger than the width of the full band 48, and the full band 48 is interposed between the two belt plies 42 having a large width.

In the tire 2, the first belt ply 42A, the second belt ply 42B, and the third belt ply 42C have a width larger than the width of the full band 48. In the radial direction, the first belt ply 42A and the second belt ply 42B are located inward of the full band 48, and the third belt ply 42C is located outward of the full band 48. The pair of edge bands 50 are located outward of the third belt ply 42C in the radial direction. As described above, each edge band 50 is located outward of the end 48e of the full band 48 in the radial direction. The edge band 50 overlaps the end 48e of the full band 48 via the third belt ply 42C in the radial direction.

In the tire 2, the full band 48 can stably exhibit the function of suppressing a shape change, and improvement of uneven wear resistance is achieved. From this viewpoint, preferably, in the tire 2, the plurality of belt plies 42 included in the belt 38 include the first belt ply 42A located radially inward, the second belt ply 42B located outward of the first belt ply 42A in the radial direction, and the third belt ply 42C located outward of the second belt ply 42B in the radial direction, the first belt ply 42A, the second belt ply 42B, and the third belt ply 42C have a width larger than the width of the full band 48, the first belt ply 42A and the second belt ply 42B are located inward of the full band 48 in the radial direction, the third belt ply 42C is located outward of the full band 48 in the radial direction, and each edge band 50 located outward of the full band 48 radially overlaps the end 48e of the full band 48 with the third belt ply 42C provided between each edge band 50 and the end 48e of the full band 48.

As is obvious from the above description, according to the present invention, the heavy duty pneumatic tire 2 that can suppress a shape change due to running and achieve improvement of uneven wear resistance is obtained. The present invention exhibits a remarkable effect in the low-flatness heavy duty pneumatic tire 2 having a nominal aspect ratio of 65% or less.

### EXAMPLES

The following will describe the present invention in further detail by means of examples, etc. The present invention is defined and limited by the claims, whereas the examples are not limiting.

### [Example 1]

A heavy duty pneumatic tire (tire size = 355/50R22.5) having the basic structure shown in FIG. 1 to FIG. 3 and having specifications shown in Table 1 below was obtained.

In Example 1, each end of the full band was located outward of the shoulder circumferential groove in the axial direction. This is represented as "Y" in the cell for "full band end" in Table 1. The distance We in the axial direction from the end of the full band to the inner end of the edge band was 25 mm. The ratio (SF/WS) of the distance SF in the axial direction from the shoulder circumferential groove to the end of the full band, to the width WS in the axial direction of the shoulder land portion, was 15%. Two belt plies were provided radially inward of the full band. This is represented as "2" in the cell for "number of belt plies" in Table 1.

### [Comparative Example 1]

A tire of Comparative Example 1 was obtained in the same manner as Example 1, except that each end of the full band was located inward of the shoulder circumferential groove in the axial direction and no edge band was provided. The fact that each end of the full band was located inward of the shoulder circumferential groove in the axial direction is represented as "N" in the cell for "full band end" in Table 1.

### [Examples 2 to 4]

Tires of Examples 2 to 4 were obtained in the same manner as Example 1, except that the distance We and the ratio (SF/WS) were as shown in Table 1 below.

### [Examples 5 to 8]

Tires of Examples 5 to 8 were obtained in the same manner as Example 1, except that the number of belt plies located radially inward of the full band, the distance We, and the ratio (SF/WS) were as shown in Table 2 below.

### [Profile Change]

A test tire was fitted onto a rim (11.75×22.5) and inflated with air to adjust the internal pressure of the tire to a normal internal pressure. The tire was caused to run on a drum tester at a speed of 80 km/h for 1000 km, and a profile of the case line on the inner side of the shoulder circumferential groove was obtained. The profile of the case line was compared with the profile of the case line before running to confirm a change in profile before and after running. The results are represented as indexes according to the following ratings in Table 1 and Table 2 below. A higher value represents that a change in profile is reduced. In the running test, a normal load was applied to the tire.

| Change amount | Index |
|---|---|
| 0.0 mm to 0.5 mm | 100 |
| 0.6 mm to 1.0 mm | 95 |
| 1.1 mm to 1.5 mm | 90 |
| 1.6 mm to 2.0 mm | 85 |
| 2.1 mm to 2.5 mm | 80 |

### [Uneven Wear Resistance]

A test tire was fitted onto a rim (11.75×22.5) and inflated with air to adjust the internal pressure of the tire to a normal internal pressure. The tire was mounted to a drive shaft of a test vehicle (tractor head). A trailer loaded with luggage was towed by the test vehicle, and the test vehicle was caused to run on a general road. When the wear rate of the tire reached 30% in terms of mass, the difference between the wear amount of the shoulder land portion and the wear amount of the middle land portion of the test tire was calculated. The results are represented as indexes with the value of Comparative Example 1 being regarded as 100, in Table 1 and Table 2 below. A higher value represents that the difference in wear amount is smaller and the uneven wear resistance is better.

### [JLB Break Resistance]

Each tire for which the above-described evaluation had been made for uneven wear resistance was inspected by sialography or X-ray to confirm the presence/absence of internal damage. When internal damage was confirmed, the tire was disassembled and it was confirmed whether this internal damage was a break of the band cord of the full band. The results are represented in Table 1 and Table 2 below according to the following ratings.

| | |
|---|---|
| Case where there is no break portion in band cord | A |
| Case where there is one break portion in band cord | B |
| Case where there are two or more break portions in band cord | C |

**[Table 1]**

| | Comparative Example 1 | Example 2 | Example 1 | Example 3 | Example 4 |
|---|---|---|---|---|---|
| Full band end | N | Y | Y | Y | Y |
| We [mm] | - | 5 | 25 | 20 | 10 |
| SF/WS [%] | - | 15 | 15 | 20 | 30 |
| Number of belt plies | 2 | 2 | 2 | 2 | 2 |
| Profile change | 85 | 90 | 100 | 100 | 95 |
| Uneven wear resistance | 100 | 105 | 115 | 110 | 110 |
| JLB break resistance | A | B | A | A | A |

**[Table 2]**

| | Example 5 | Example 6 | Example 7 | Example 8 |
|---|---|---|---|---|
| Full band | Y | Y | Y | Y |
| We [mm] | 20 | 20 | 10 | 20 |
| SF/WS [%] | 5 | 25 | 30 | 20 |
| Number of belt plies | 1 | 1 | 1 | 0 |
| Profile change | 90 | 100 | 95 | 100 |
| Uneven wear resistance | 105 | 115 | 110 | 110 |
| JLB break resistance | A | B | B | C |

As shown in Table 1 and Table 2, in the Examples, occurrence of a break of the band cord is suppressed, a shape change due to running is suppressed, and improvement of uneven wear resistance is achieved. From the evaluation results, advantages of the present invention are clear.

### INDUSTRIAL APPLICABILITY

The above-described technology for suppressing a shape change due to running and achieving improvement of uneven wear resistance can be applied to various tires.

### REFERENCE SIGNS LIST

- 2: tire
- 4: tread
- 20: reinforcing layer
- 20e: end of reinforcing layer 20
- 22: tread surface
- 28, 28s, 28m: circumferential groove
- 30, 30s, 30m, 30c: land portion
- 38: belt
- 40: band
- 40e: end of band 40
- 42: belt ply
- 44: belt cord
- 48: full band
- 48e: end of full band 48
- 50: edge band
- 50se: outer end of edge band 50
- 50ue: inner end of edge band 50
- 52: band cord

## Claims

1. A heavy duty pneumatic tire (2) comprising a tread (4) that comes into contact with a road surface and a reinforcing layer (20) located inward of the tread (4) in a radial direction, wherein
circumferential grooves (28) are formed on the tread (4), whereby land portions (30) aligned in an axial direction are formed in the tread (4),
among the circumferential grooves (28), a circumferential groove (28) located on each outer side in the axial direction is a shoulder circumferential groove (28s),
a land portion (30) located outward of the shoulder circumferential groove (28s) in the axial direction is a shoulder land portion (30s),
the reinforcing layer (20) includes a belt (38) including a large number of belt cords (44) aligned with each other, and a band (40) including a band cord (52),
the belt (38) includes a plurality of belt plies (42) aligned in the radial direction,
the band (40) includes a full band (48) having ends (48e) opposed to each other across an equator plane (CL), and a pair of edge bands (50) located outward of the ends (48e) of the full band (48) in the radial direction, and
each end (48e) of the full band (48) is located outward of the shoulder circumferential groove (28s) in the axial direction,
**characterized in that** the heavy duty pneumatic tire (2) has a nominal aspect ratio of 65 % or less, the circumferential grooves (28) are at least three circumferential grooves (28), the land portions (30) are at least four land portions (30), the band cord (52) is spirally wound, at least two belt plies (42A, 42B) of the plurality of belt plies (42) are located inward of the full band (48) in the radial direction, and the at least two belt plies (42A, 42B) located inward of the full band (48) have a width larger than a width of the full band (48).

2. The heavy duty pneumatic tire (2) according to claim 1, wherein a ratio of a distance (SF) in the axial direction from the shoulder circumferential groove (28s) to the end (48e) of the full band (48), to a width (WS) in the axial direction of the shoulder land portion (30s), is not less than 10 % and not greater than 50 %.

3. The heavy duty pneumatic tire (2) according to claim 1 or 2, wherein a distance (We) in the axial direction from the end (48e) of the full band (48) to an inner end (50ue) of the edge band (50) is not less than 10 mm.

4. The heavy duty pneumatic tire (2) according to any one of claims 1 to 3, wherein each end (48e) of the full band (48) is located inward of an end (38e) of the belt (38) in the axial direction.

5. The heavy duty pneumatic tire (2) according to any one of claims 1 to 4, wherein the plurality of belt plies (42) includes two belt plies (42) having a width larger than a width of the full band (48), and
the full band (48) is interposed between the two belt plies (42).

6. The heavy duty pneumatic tire (2) according to any one of claims 1 to 4, wherein the plurality of belt plies (42) includes a first belt ply (42A) located radially inward, a second belt ply (42B) located outward of the first belt ply (42A) in the radial direction, and a third belt ply (42C) located outward of the second belt ply (42B) in the radial direction,
the first belt ply (42A), the second belt ply (42B), and the third belt ply (42C) have a width larger than a width of the full band (48),
the first belt ply (42A) and the second belt ply (42B) are located inward of the full band (48) in the radial direction,
the third belt ply (42C) is located outward of the full band (48) in the radial direction, and
each edge band (50) radially overlaps an end (48e) of the full band (48) with the third belt ply (42C) provided between each edge band (50) and the end (48e) of the full band (48).

7. The heavy duty pneumatic tire (2) according to claim 6, wherein the plurality of belt plies (42) includes a fourth belt ply (42D) located outward of the third belt ply (42C) in the radial direction,
the fourth belt ply (42D) is located between the pair of edge bands (50).

8. The heavy duty pneumatic tire (2) according to any one of claims 1 to 7, wherein an inner end (50ue) of the edge band (50) is located outward of a bottom of the shoulder circumferential groove (28s) in the axial direction.

9. The heavy duty pneumatic tire (2) according to claim 8, wherein the inner end (50ue) of the edge band (50) is located outward of the shoulder circumferential groove (28s) in the axial direction.

## Patentansprüche

1. Schwerlast-Luftreifen (2), der eine Lauffläche (4), die mit einer Straßenoberfläche in Kontakt kommt, und eine Verstärkungsschicht (20) umfasst, die in einer radialen Richtung innen von der Lauffläche (4) angeordnet ist, wobei
auf der Lauffläche (4) Umfangsrillen (28) gebildet sind, wodurch in der Lauffläche (4) Landabschnitte (30) gebildet sind, die in der axialen Richtung ausgerichtet sind,
unter den Umfangsrillen (28) eine Umfangsrille (28), die sich auf jeder Außenseite in der axialen Richtung befindet, eine Schulterumfangsrille (28s) ist,
ein Landabschnitt (30), der in der axialen Richtung außen von der Schulterumfangsrille (28s) angeordnet ist, ein Schulterlandabschnitt (30s) ist,
die Verstärkungsschicht (20) einen Gürtel (38), der eine große Anzahl Gürtelkorde (44) aufweist, die miteinander ausgerichtet sind, und ein Band (40) umfasst, das einen Bandkord (52) aufweist,
der Gürtel (38) eine Vielzahl Gürtellagen (42) umfasst, die in der radialen Richtung ausgerichtet sind,
das Band (40) ein Vollband (48) mit Enden (48e), die einander in einer Äquatorebene (CL) gegenüberliegen, und ein Paar Randbänder (50) umfasst, die in der radialen Richtung außen von den Enden (48e) des Vollbandes (48) angeordnet sind, und
jedes Ende (48e) des Vollbandes (48) in der axialen Richtung außen von der Schulterumfangsrille (28s) angeordnet ist,
**dadurch gekennzeichnet, dass** der Schwerlastluftreifen (2) ein Nennquerschnittsverhältnis von 65 % oder weniger aufweist, die Umfangsrillen (28) mindestens drei Umfangsrillen (28) sind, die Landabschnitte (30) mindestens vier Landabschnitte (30) sind, der Bandkord (52) spiralförmig gewickelt ist, mindestens zwei Gürtellagen (42A, 42B) der Vielzahl von Gürtellagen (42) in der radialen Richtung innen von dem Vollband (48) angeordnet sind und die mindestens zwei Gürtellagen (42A, 42B), die innen von dem Vollband (48) angeordnet sind, eine Breite aufweisen, die größer ist als eine Breite des Vollbandes (48).

2. Schwerlast-Luftreifen (2) nach Anspruch 1, wobei ein Verhältnis eines Abstands (SF) in der axialen Richtung von der Schulterumfangsrille (28s) bis zum Ende (48e) des Vollbandes (48) zu einer Breite (WS) in der axialen Richtung des Schulterlandabschnitts (30s) nicht weniger als 10 % und nicht mehr als 50 % beträgt.

3. Schwerlast-Luftreifen (2) nach Anspruch 1 oder 2, wobei ein Abstand (We) in der axialen Richtung von dem Ende (48e) des Vollbandes (48) bis zu einem inneren Ende (50ue) des Randbandes (50) nicht weniger als 10 mm beträgt.

4. Schwerlast-Luftreifen (2) nach einem der Ansprüche 1 bis 3, wobei jedes Ende (48e) des Vollbandes (48) in der axialen Richtung innen von einem Ende (38e) des Gürtels (38) angeordnet ist.

5. Schwerlast-Luftreifen (2) nach einem der Ansprüche 1 bis 4, wobei
die Vielzahl von Gürtellagen (42) zwei Gürtellagen (42) umfasst, die eine Breite aufweisen, die größer ist als eine Breite des Vollbandes (48), und
das Vollband (48) zwischen den beiden Gurtlagen (42) angeordnet ist.

6. Schwerlast-Luftreifen (2) nach einem der Ansprüche 1 bis 4, wobei
die Vielzahl von Gürtellagen (42) eine erste Gürtellage (42A), die radial innen angeordnet ist, eine zweite Gürtellage (42B), die in der radialen Richtung außen von der ersten Gürtellage (42A) angeordnet ist, und eine dritte Gürtellage (42C), die in der radialen Richtung außen von der zweiten Gürtellage (42B) angeordnet ist, umfasst,
die erste Gürtellage (42A), die zweite Gürtellage (42B) und die dritte Gürtellage (42C) eine Breite aufweisen, die größer ist als eine Breite des Vollbandes (48),
die erste Gürtellage (42A) und die zweite Gürtellage (42B) in der radialen Richtung innen von dem Vollband (48) angeordnet sind,
die dritte Gürtellage (42C) in der radialen Richtung außen von dem Vollbandes (48) angeordnet ist, und
jedes Randband (50) ein Ende (48e) des Vollbandes (48) radial überlappt, wobei die dritte Gürtellage (42C) zwischen jedem Randband (50) und dem Ende (48e) des Vollbandes (48) vorgesehen ist.

7. Schwerlast-Luftreifen (2) nach Anspruch 6, wobei
die Vielzahl von Gürtellagen (42) eine vierte Gürtellage (42D) umfasst, die in der radialen Richtung außen von der dritten Gürtellage (42C) angeordnet ist,
die vierte Gürtellage (42D) zwischen dem Paar Randbändern (50) angeordnet ist.

8. Schwerlast-Luftreifen (2) nach einem der Ansprüche 1 bis 7, wobei ein inneres Ende (50ue) des Randbandes (50) in der axialen Richtung außen von einem Grund der Schulterumfangsrille (28s) angeordnet ist.

9. Schwerlast-Luftreifen (2) nach Anspruch 8, wobei das innere Ende (50ue) des Randbandes (50) in der axialen Richtung außen von der Schulterumfangsrille (28s) angeordnet ist.

## Revendications

1. Bandage pneumatique pour service intensif (2) comprenant une bande de roulement (4) qui vient en contact avec une surface routière et une couche de renforcement (20) située à l'intérieur de la bande de roulement (4) dans une direction radiale, dans lequel
des rainures circonférentielles (28) sont formées sur la bande de roulement (4), grâce à quoi des portions en relief (30) alignées dans une direction axiale sont formées dans la bande de roulement (4),
parmi les rainures circonférentielles (28), une rainure circonférentielle (28) située sur chaque côté extérieur dans la direction axiale est une rainure circonférentielle d'épaulement (28s),
une portion en relief (30) située à l'extérieur de la rainure circonférentielle d'épaulement (28s) dans la direction axiale est une portion en relief d'épaulement (30s),
la couche de renforcement (20) inclut une ceinture (38) incluant un grand nombre de câblés de ceinture (44) alignés les uns avec les autres, et une bande (40) incluant un câblé de bande (52),
la ceinture (38) inclut une pluralité de nappes de ceinture (42) alignées dans la direction radiale,
la bande (40) inclut une bande complète (48) ayant des extrémités (48e) opposées les unes aux autres à travers un plan d'équateur (CL), et une paire de bandes de bord (50) situées à l'extérieur des extrémités (48e) de la bande complète (48) dans la direction radiale, et
chaque extrémité (48e) de la bande complète (48) est située à l'extérieur de la rainure circonférentielle d'épaulement (28s) dans la direction axiale,
**caractérisé en ce que** le bandage pneumatique pour service intensif (2) a un rapport d'aspect nominal de 65 % ou moins, les rainures circonférentielles (28) sont au moins trois rainures circonférentielles (28), les portions en relief (30) sont au moins quatre portions en relief (30), le câblé de bande (52) est enroulé en spirale, au moins deux nappes de ceinture (42A, 42B) de la pluralité de nappes de ceinture (42) sont situées à l'intérieur de la bande complète (48) dans la direction radiale, et lesdites au moins deux nappes de ceinture (42A, 42B) situées à l'intérieur de la bande complète (48) ont une largeur plus grande qu'une largeur de la bande complète (48).

2. Bandage pneumatique pour service intensif (2) selon la revendication 1, dans lequel un rapport d'une distance (SF) dans la direction axiale depuis la rainure circonférentielle d'épaulement (28s) jusqu'à l'extrémité (48e) de la bande complète (48), sur une largeur (WS) dans la direction axiale de la portion en relief d'épaulement (30s), n'est pas inférieur à 10 % et n'est pas supérieur à 50 %.

3. Bandage pneumatique pour service intensif (2) selon la revendication 1 ou 2, dans lequel une distance (We) dans la direction axiale depuis l'extrémité (48e) de la bande complète (48) jusqu'à une extrémité intérieure (50ue) de la bande de bord (50) n'est pas inférieure à 10 mm.

4. Bandage pneumatique pour service intensif (2) selon l'une quelconque des revendications 1 à 3, dans lequel chaque extrémité (48e) de la bande complète (48) est située à l'intérieur d'une extrémité (38e) de la ceinture (38) dans la direction axiale.

5. Bandage pneumatique pour service intensif (2) selon l'une quelconque des revendications 1 à 4, dans lequel la pluralité de nappes de ceinture (42) inclut deux nappes de ceinture (42) ayant une largeur plus grande qu'une largeur de la bande complète (48), et
la bande complète (48) est interposée entre les deux nappes de ceinture (42).

6. Bandage pneumatique pour service intensif (2) selon l'une quelconque des revendications 1 à 4, dans lequel la pluralité de nappes de ceinture (42) inclut une première nappe de ceinture (42A) située radialement à l'intérieur, une deuxième nappe de ceinture (42B) située à l'extérieur de la première nappe de ceinture (42A) dans la direction radiale, et une troisième nappe de ceinture (42C) située à l'extérieur de la deuxième nappe de ceinture (42B) dans la direction radiale,
la première nappe de ceinture (42A), la deuxième nappe de ceinture (42B) et la troisième nappe de ceinture (42C) ont une largeur plus grande qu'une largeur de la bande complète (48),
la première nappe de ceinture (42A) et la deuxième nappe de ceinture (42B) sont situées à l'intérieur de la bande complète (48) dans la direction radiale,
la troisième nappe de ceinture (42C) est située à l'extérieur de la bande complète (48) dans la direction radiale, et
chaque bande de bord (50) chevauche radialement une extrémité (48e) de la bande complète (48) avec la troisième nappe de ceinture (42C) prévue entre chaque bande de bord (50) et l'extrémité (48e) de la bande complète (48).

7. Bandage pneumatique pour service intensif (2) selon la revendication 6, dans lequel la pluralité de nappes de ceinture (42) inclut une quatrième nappe de ceinture (42D) située à l'extérieur de la troisième nappe de ceinture (42C) dans la direction radiale,
la quatrième nappe de ceinture (42D) est située entre la paire de bandes de bord (50).

8. Bandage pneumatique pour service intensif (2) selon l'une quelconque des revendications 1 à 7, dans lequel une extrémité intérieure (50ue) de la bande de bord (50) est située à l'extérieur d'un fond de la rainure circonférentielle d'épaulement (28s) dans la direction axiale.

9. Bandage pneumatique pour service intensif (2) selon la revendication 8, dans lequel l'extrémité intérieure (50ue) de la bande de bord (50) est située à l'extérieur de la rainure circonférentielle d'épaulement (28s) dans la direction axiale.
